# EUROPEAN PATENT APPLICATION

(11) **EP 2 479 654 A1**
(43) Date of publication of application: **25.07.2012**
(21) Application number: 11152423.7
(22) Date of filing: 27.01.2011
(51) Int. Cl.: G06F 3/041

(54) **Providing a preload apparatus in a touch sensitive electronic device**

(30) Priority: 20.01.2011 US 9984
(71) Applicant: Research In Motion Limited, Waterloo, ON N2L 3W8 (CA)
(72) Inventor: Sulem, Firmansyah Kuncoko, Waterloo Ontario N2L 3L3 (CA); Infanti, James Carl, Waterloo Ontario N2L 3L3 (CA)
(74) Representative: Hibbert, Juliet Jane Grace

(57) **Abstract**

A spring component used in an electronic device provides a preload force used to urge a touch input component against a force transducer, The spring also provides an electrostatic grounding between the touch input component and other components of the electronic device. The use of the spring in an electronic device achieves both grounding and preloading and provides improvements in touch sensitive electronic devices.

## Description

### FIELD OF TECHNOLOGY

The present disclosure relates generally to a touch sensitive electronic device, and, in one embodiment, more specifically to a spring that provides a preload force in a touch sensitive electronic device.

### BACKGROUND

Electronic devices, including portable electronic devices, have gained widespread use and may provide a variety of functions including, for example, telephonic, electronic messaging and other personal information manager (PIM) application functions. Portable electronic devices may include, for example, mobile stations, simple cellular telephones, smart telephones, wireless personal digital assistants (PDAs), portable gaming devices, laptop computers and tablet computers. Other examples of electronic devices may include touch screen televisions, electronic kiosks, electronic signature readers, web appliances, etc.

A touch sensitive electronic device provides for user input such as a touch and can be configured to perform various functions and operations as a result of a touch input. Touch sensitive electronic devices are often constructed with limited space for components. Many types of touch sensitive electronic devices include touch sensitive displays and/or touchscreen displays. The information displayed on the touch sensitive display may be modified depending on the detections of touch input.

Some electronic devices may utilize a force transducer, such as a force sensitive resistor (FSR) or force sensitive capacitor (FSC) to measure an amount of force associated with a touch input. FSRs are electronic resistors that exhibit a decrease in resistance in response to an increase in force applied to the FSR. Other force transducers may utilize other electrical or signal properties of materials to detect variations in force on the force transducer.

### BRIEF DESCRIPTION OF THE DRAWINGS

Embodiments of the present disclosure will now be described, by way of example only, with reference to the attached Figures in which like reference numerals are used to indicate similar features.

Figure 1a is a sectional side view of an example electronic device including a force transducer in accordance with an embodiment described in the disclosure.

Figure 1b is a sectional side view of an example electronic device including actuators in accordance with an embodiment described in the disclosure.

Figure 2 is a perspective view of an example electronic device in accordance with an embodiment described in the disclosure.

Figure 3 is a perspective view of a spring in accordance with an embodiment described in the disclosure.

Figure 4 is a perspective view of an electronic device showing a design used in the prior art.

Figure 5a is a graph of an electrical resistance characteristic of a force sensitive resistor in accordance with an embodiment in the disclosure.

Figure 5b is a graph of a force sensitive characteristic of a force transducer in accordance with an embodiment in the disclosure.

Figure 6 is a block diagram of an example electronic device in accordance with an embodiment in the disclosure.

### DETAILED DESCRIPTION

This disclosure describes a spring component ("spring") used in an electronic device. The spring can provide a preloading utility and a grounding utility. In an embodiment, the spring comprises a mounting portion configured to mount the spring to a first component, a grounding portion comprising a conductive grounding arm that provides grounding between the first component and a second component, and a preload portion comprising at least one preload arm that provides a preload force. In one implementation, the preload force is directed in a first direction opposite from the grounding portion. In the first direction, the spring exerts a "preload" force which causes a corresponding initial force urging the spring towards the second component. This disclosure describes the use of the spring in an electronic device to achieve both grounding and preloading of a first component with a second component.

In general, a preload force causes an initial state in a force transducer. The preload force produces a corresponding initial force upon the force transducer to tune or preset the force transducer. In an embodiment of this disclosure, a spring is mounted to a touch input component so that the spring exerts a preload force that causes a touch input component to be pressed against a base chassis. A force transducer is positioned between the base chassis and the touch input component. For example, the force transducer may be attached to a surface of the base chassis or a surface of the touch input component.

In an electronic device comprising the spring, the spring's grounding arm provides electrostatic grounding between the touch input component and the base chassis. In other words, the spring conducts electric charge between the touch input component and the base chassis. The importance of electrostatic grounding in an electronic device is well understood to a person of skill in the art. For example, electrostatic charges that are not grounded or distributed in an electronic device can reduce or eliminate the effectiveness of components in the electronic device. The grounding purpose of the spring may also provide radio frequency (RF) advantages to an electronic device by providing grounding for a touch-sensitive display in an electronic device.

The present disclosure provides the design of a spring that serves more than one purpose in an electronic device. The spring component may advantageously reduce the number of components in an electronic device used to perform preloading and/or grounding. Furthermore, an embodiment of a spring as described in this disclosure is particularly well suited for low form factor and compact electronic devices, such as portable electronic devices.

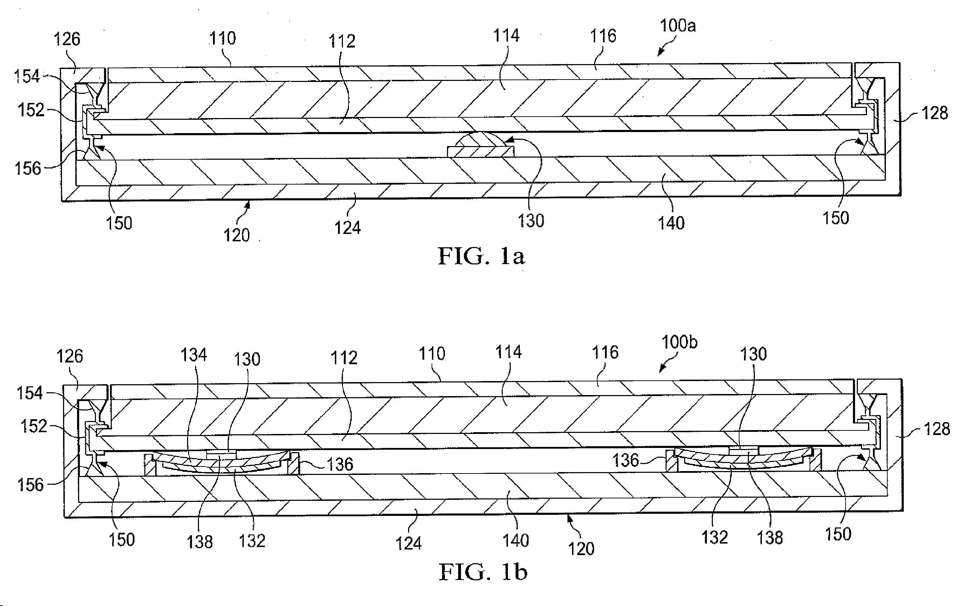

Turning to Figure 1a, a sectional side view of an example electronic device 100a including at least one force transducer 130 is shown. Figure 1a may be a cross sectional view of a portable electronic device where the force transducer 130 is positioned near a center of the electronic device. The example electronic device 100a includes a housing 120. The housing 120 may include a back portion 124 (also called a "bottom portion" in this disclosure), a frame portion 126 (also called "front portion" or "top portion" in this disclosure), and sidewalls 128 that extend between the back portion 124 and the frame portion 126. In the example electronic device 100a, a base chassis 140 is attached to the back portion 124 and supports the force transducer 130. In some embodiments, the base chassis 140 extends between the sidewalls 128, generally parallel to the back portion 124. While the base chassis 140 is shown adjacent to the back portion 124 in the example electronic device 100a, other electronic devices may have a gap or space between the base chassis 140 and the back portion 124. For example, the base chassis 140 may be attached to the back portion 124 using standoffs or other hardware components (not shown) between the base chassis 140 and the back portion 124.

The force transducer 130 may comprise a force sensitive resistor (FSR), a force sensitive capacitor, a force sensor, or other type of force sensitive component that has a characteristic that is responsive to an amount of force upon the force transducer 130. In Figure 1a, only a single force transducer 130 is illustrated. However, it should be understood that an electronic device in accordance with this disclosure may comprise a plurality of force transducers.

In the example of Figure 1a, an example touch input component 110 is shown. The touch input component 110 may comprise a support tray 112 of suitable material, such as magnesium. The touch input component 110 may also comprise a touchscreen display 116 and touch screen controller 114, or other additional components not shown. In Figure 1a, the touch input component 110 is moveable with respect to the housing 120, and is shown floating with respect to, i.e., not fastened to, the housing 120 in this example.

As the touch input component 110 is moved toward the base chassis 140, the force transducer 130 exhibits changing characteristics in correlation to the amount of force or pressure urging the touch input component 110 against the base chassis 140. For example, if the force transducer 130 is a force sensitive resistor (FSR), the amount of electrical resistance through the FSR may increase or decrease in relation to the amount of force urging the touch input component 110 against the base chassis 140.

Figure 1a also shows a functional representation of a spring 150 that is mounted on the touch input component 110. The spring 150 comprises a mounting portion 152, which in Figure 1a is shown mounted onto the support tray 112 of the touch input component 110. The spring 150 also comprises a preloading portion 154 and a grounding portion 156. It should be noted that the illustration in Figure 1a shows the functional operation of the spring 150 and is not intended to describe an actual physical shape of the spring 150. The grounding portion 156 conducts electrostatic charges from the touch input component 110 to the base chassis 140. The preloading portion 154 of the spring 150 presses against the frame portion 126 (front portion) of the housing 120. The preloading portion 154 causes a preloading force against the frame portion 126 which causes the spring 150 (and the mounted touch input component 110) to be urged against the force transducer 130. As described in this disclosure the amount of preloading force may be selected based on the characteristics of the force transducer and may be related to a corresponding initial force at the force transducer.

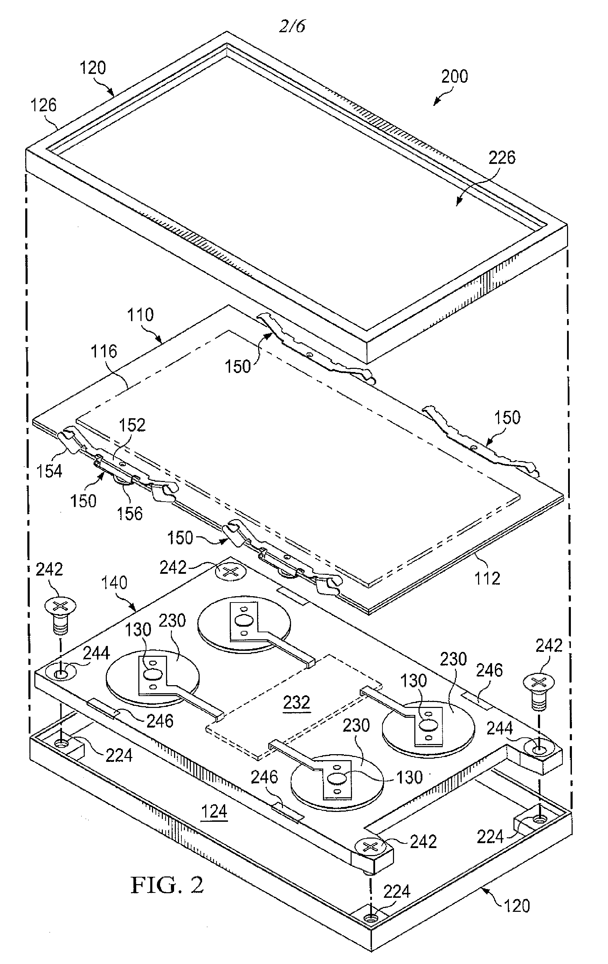

There are two springs 150 illustrated in each of Figures 1a and 1b. It should be understood that in some implementations, only one spring 150 may be used in an electronic device, or multiple springs 150 may be used at various locations in the electronic device. For example, Figure 2 illustrates four springs 150 used in example portable electronic device 200.

Figure 1b is a sectional side view of an example electronic device 1000b including actuators in accordance with an embodiment described in the disclosure. The example electronic device 100b comprises piezoelectric (piezo) actuators that are positioned relative to force transducers 130.

The force transducer 130 may comprise one or more piezo devices that provide tactile feedback for the example electronic device 100b. In this example, four piezo devices are utilized (two are shown in the figure), one disposed near each corner of the device 100b. The piezo devices may be disposed between the base chassis 140 and the touch input component 110. Each piezo device may include a piezoelectric ceramic disk or actuator 132 adhered to a substrate 134. The substrate 134 is elastically deformable, and may be comprised of metal, such that the substrate 134 bends when the piezo device contracts, e.g., diametrically. The piezo device may contract, for example, as a result of build-up of charge/voltage at the piezo device or in response to a force, such as an external force applied to the touch input component 110. Each substrate 134 of the piezo device may comprise a support, such as a ring-shaped frame 136, for supporting the piezoelectric ceramic disk 132 and substrate 134 while permitting flexing, The support rings 136 may be disposed on the base chassis 140 or may be part of the base chassis 140, which may be a printed circuit board in a fixed relation to at least a part of the housing 120. Optionally, the substrate 134 may be mounted on a flat surface, such as the base chassis 140. The force transducer 130 may comprise other elements 138, such as a hard rubber, silicone, polyester, and/or polycarbonate, disposed between the piezo actuator 132 and the touch input component 110. This element 138 may provide a bumper or cushion for the force transducer 130 as well as facilitate actuation of the piezo actuator.

Contraction of the piezo device applies a spring-like force, for example, opposing a force externally applied to the touch input component 110 or providing tactile feedback in response to another event, such as an incoming call or other situation that results in provision of tactile feedback. The charge/voltage may be adjusted by varying the applied voltage or current, thereby controlling the force applied by the piezo devices.

In the example electronic device 100b, the touch input component 110 may be urged against the force transducer 130 attached to the base chassis 140. When a force of the touch input component 110 against the force transducer 130 exceeds a predetermined threshold, the example electronic device 100b may apply an electric voltage or current to the piezo device causing a vibration or other haptic feedback to be transferred through the touch input component 110. The predetermined threshold of force detected at the force transducer 130 may be selected based on the electric characteristics of the force transducer 130. The spring 150 in figure 1b provides a preload force against the frame portion 126 of the housing to urge the spring 150 and the touch input component 110 against the force transducer 130 by an initial force to offset the amount of additional force needed to cause the predetermined threshold amount of force.

Figure 2 is a perspective view of an example portable electronic device 200 in accordance with an embodiment in the disclosure. In Figure 2, the example portable electronic device 200 comprises a housing 120, a base chassis 140, and a touch input component 110.

The housing 120 comprises a frame portion 126 and a back portion 124. In this example, the frame portion 126 defines an opening 226 which allows access to the touch input component 110 through the opening 226. In the back portion 124 of the housing 120, attachment points 224 are provided at the corners of the back portion 124. It should be understood that attachment points may be located at any position in the back portion 124 and may comprise further hardware (not shown) which is used to couple a base chassis 140 to the back portion 124.

In this example, the base chassis 140 is coupled to the back portion 124 using screw through holes at the corners of the base chassis 140. For example, screw 242 and hole 244 are shown in one corner of the base chassis 140 and connect the base chassis 140 to a corresponding attachment point 224 in the corresponding corner of the back portion 124 of housing 120. For simplicity, other screws (not shown) or other attachment means could be used to couple the base chassis 140 to the back portion 124. Attachment means may comprise screws, epoxy, welding (including laser welding), slide on clip, friction surface, or any means which couples the base chassis 140 to the back portion 124 in a substantially non-moveable configuration.

In Figure 2, the base chassis 140 comprises four piezo devices, such as piezo device 230. The piezo devices may include a ceramic disk and substrate, similar to those described in Figure 1b. In this example, four force transducers are shown. Force transducer 130 is shown as part of the piezo device 230. It should be understood that the force transducer 130 could be placed elsewhere on the base chassis 140 or on the underside of the touch input component 110. However, in one implementation, the force transducer 130 is located at the piezo device 230 so that they comprise a module that is placed on the base chassis 140 and the module is configured to receive and transfer physical contact force to/from the touch input component 110, Also shown in Figure 2 is a piezo controller 232 for coordinating the several piezo devices and force transducers.

Turning to the touch input component 110 of Figure 2, shown is a support tray 112, optional touchscreen display 116 (shown in broken lines), and four springs 150. Each spring is placed on the edge of the support tray 112 at locations near the corners of the support tray 112 so that they are near corresponding locations of the piezo devices on the base chassis 140. The spring 150 is shown having a preloading portion 154 which is shaped upwards from the mounting portion 152, Below the mounting portion 152, the spring also comprises a grounding portion 156. The grounding portion 156 is shaped so that it makes contact with an electrostatically grounded connection 246 on the base chassis 140.

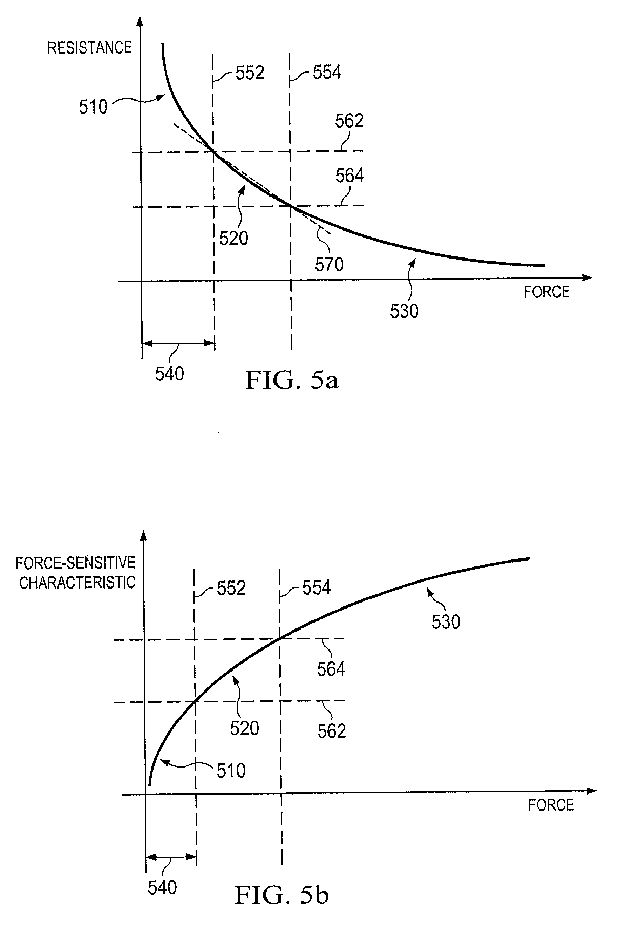

When the example portable electronic device 200 is fully assembled, the spring 150 is securely fastened to the touch input component 110. The preloading portion 154 of the spring 150 presses against the underside of the frame portion 126, causing the touch input component 110 to be urged downwards (away from the frame portion 126). The frame portion 126 and back portion 124 of the housing 120 are sealed or otherwise connected to each other. The grounding portion 156 of the spring 150 makes contact with the electrostatically grounded connection 246 on the base chassis 140. The preloading portion 154 of the spring 150 pushes the touch input component 110 away from the frame portion 126 and against the base chassis 140, and specifically against the force transducer 130 on the base chassis 140. The amount of force of the touch input component 110 against the force transducer 130 is in relation to the amount of preloading force the preload portion 154 of the spring 150 applies against the frame portion 126. The amount of preloading force may be selected based on force sensitive characteristics of the force transducer 130. Figure 5 describes the selection of the preloading force and corresponding initial force in greater detail.

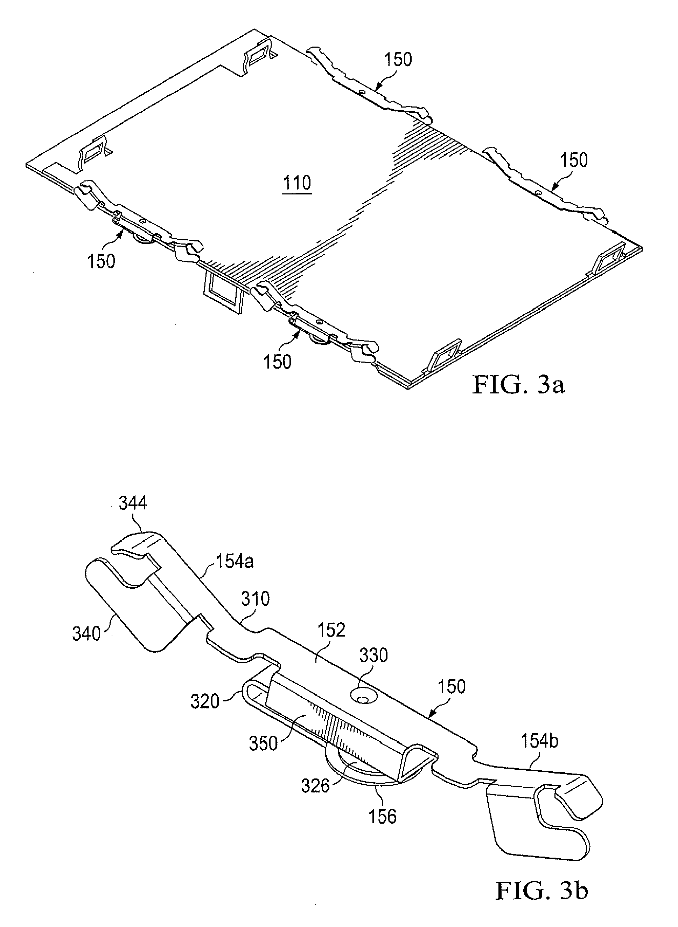

Figure 3 includes a perspective view of a spring 150 in accordance with an embodiment described in the disclosure. Similarly to Figure 2, the spring 150 may be placed a locations along the edge of the touch input component 110 or a support tray of the touch input component. The spring 150 in Figure 3 comprises a first preloading portion 154a and a second preloading portion 154b. The preloading portions are formed similar to a flat spring, bending upward from the mounting portion 152. For example, the first preloading portion 154a is shown with a bend 310 upward from the mounting portion 152. The curvature of the bend 310 and the size of the bend portion are selected based on the desired preloading force. The bend 310 is also referred to as a flexion point in this disclosure.

Depending on the material thickness, the type of material, and the angle of the bend portion, various amounts of preloading force may be achieved. Other properties known to a person of skill in the art may be selected based on desired characteristic of the spring apparatus. For example, the amount of preload force may be determined by the length of the preload arm. A longer preload arm may result in a smaller preload force than a shorter preload arm having the same displacement. In this present disclosure, the preload arm is shorter than the grounding arm, and there are two preload arms in the spring apparatus to provide larger preload force on the preload arm than the grounding arm.

The grounding portion 156 is shown below the mounting portion 152 and comprises an electrostatically conductive material. For example, the electrostatically conductive material may be a metal, or some material with a property that has a low resistance to electric charges. The grounding portion 156 in Figure 3 is formed from a fold 320 extending from the mounting portion 152 and folding back under the mounting portion 152 to the grounding portion 156. In some embodiments, the grounding portion 156 may comprise a spoon-like grounding connector 326. The grounding connector 326 may be shaped like a spoon so that the spring has a single point of contact with the basis chassis and therefore has a lower contact resistance.

Other optional features of the spring 150 are depicted in Figure 3. For example, the mounting portion 152 may comprise a side portion 350. The side portion aligns the length of the spring 150 to the side of the touch input component 110. A dimple 330 (also referred to as a "detent") on the spring 150 may be added so that when the spring is attached to the touch input component 110, the dimple 330 is seated in a corresponding socket (not shown) on the surface of the touch input component 110. The dimple 330 and socket may advantageously provide alignment of the spring to a desired location and/or aid in securely mounting the spring 150 to the touch input component 110. The dimple 330 may also make contact with an electrostatically conductive portion of the touch input component 110 so that electrostatic charge from the touch input component 110 may be transferred through the spring 150 to the grounding portion 156 and the base chassis (not shown in Figure 3) having contact with the grounding portion 156.

In Figure 3, the spring 150 also comprises optional features of the grounding portion 154a, 154b. For example, a side arm 340 of the first preloading portion 154a may provide additional alignment and stability to the spring 150 as the preloading portion 154a is compressed or depressed. A stop arm 344 of the first preloading portion 154a may prevent the first preloading portion 154a from compressing beyond an allowable amount. For example, as the first preloading portion 154a is compressed, the stop arm 344 may make contact with the surface of the touch input component 110 (or support tray). In Figure 3, the stop arm 344 is curved in a direction towards the touch input component, which may be referred to as a pronated design. It should be understood that while the stop arm 344 is depicted in a pronated design, alternative designs might include a supinated stop arm.

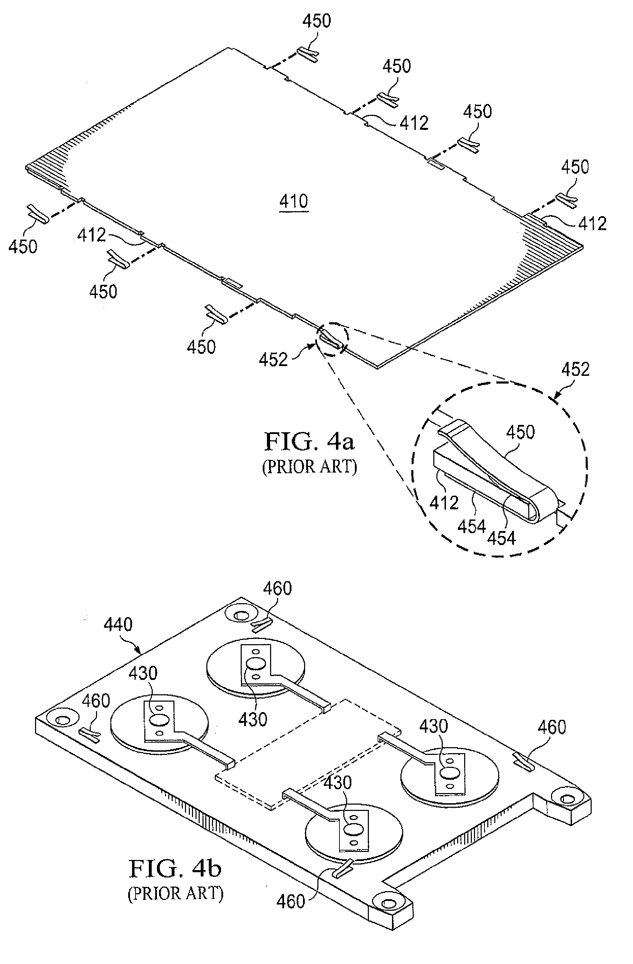

Figure 4 is a perspective view of an electronic device showing a previous design with separate preloading and grounding springs. Referring to Figure 4, a support tray of a touch input component 410 is shown. At eight locations along the edge of the support tray are eight preload springs 450. In the blowup diagram 452 of one of the preload springs 450, a tab 412 is shown which extends slightly beyond the edge of the support tray. The preload spring 450 is welded 454 to the tab 412, in such a way that the preload spring 450 pressed upwards from the tab 412 while being secured to the tab 412 with welds. It should be apparent that the preload springs 450 in Figure 4 only provide preloading force and do not provide grounding or other functions of springs claimed in this disclosure.

In Figure 4, the base chassis 440 comprises four piezo devices with force transducers 430. Located substantially near the four corners of the base chassis 440 are grounding tabs 460. The grounding tab 460 extends upward from the base chassis 440 to make contact with the underside of the touch input component 410. The underside of the touch input component comprises electrostatically conductive surfaces (not shown) at the four corners. The grounding tabs 460 may be welded onto the base chassis or formed during the manufacturing process.

As should be apparent to a person of skill in the art, the spring 150 described in the present disclosure replaces separate preloading springs and grounding tabs. Furthermore, because the spring may be constructed with two or more preloading arms, the quantity of parts may be substantially reduced. Similarly, manufacturing tolerances may be better controlled by manufacturing the claimed spring as a unit rather than wide variations in the amount of preload force that may be obtained from individual preloading springs. Having fewer parts and better control of manufacturing tolerances advantageously improves touch sensitive electronic devices.

The use of a preload force in a touch sensitive electronic device is known to a person of skill in the art. In particular, a preload force may be used to apply a corresponding initial force onto the force transducer to improve the responsiveness of the force transducer. The force transducer may have a nonlinear response across various amounts of total force, and the initial force caused by the spring may be associated with a beginning of a target range within the nonlinear response.

Figure 5a is a graph of an electrical resistance characteristic of a force sensitive resistor (FSR) with a nonlinear response. In the graph, the x axis represents the amount of force applied to the FSR and the y axis represents the amount of electrical resistance through the FSR. It should be understood that other terms to describe electrical resistance, such as resistivity, may be used to describe the electrical characteristic of the FSR that opposes the flow of electric current. In Figure 5a, the resistivity of the FSR is non linear, and is represented by a curve on the graph. The curve may have general areas, such as a first area 510, a second area 520, and a third area 530. In the first area 510 the y axis may represent a vertical asymptote of the curve. The first area 510 may be associated with a break force 552 (also called "turn-on force"), which is an amount of force that causes the resistance to drop to a threshold amount 562. In some implementations the break force 552 may be associated with a starting resistivity 562 that allows a measurable amount of electric charge to pass through the FSR.

In the second area 520 of the curve, the FSR may have a substantially linear portion of the curve. In Figure 5a, a line 570 is shown as a chord/secant of the curve. The second area 520 may exhibit near ohmic properties, in which the resistivity in this range is proportional to the amount of force in this range, For example, as the force changes from a first force 552 to second force 554, the resistivity changes from an first resistance 562 to a second resistance 564 in a nearly linear proportion. This second area 520 of the curve may also be called a target range or proportional range of the electrical response of the FSR.

The third area 530 of the curve may represent a saturation range of the FSR. In this example, the x axis may represent a horizontal asymptote of the theoretical curve for the FSR. It should be noted that some portions of the curve, particularly at the extreme ranges of the first area 510 and the third area 530 represent theoretical response of the FSR.

The amount of preloading force caused by the preload portion of the spring may be selected so that a corresponding initial force 540 is applied onto the FSR. The initial force 540 may be associated with the break force of the FSR, or may be associated with the beginning of the target range of the electrical response of the FSR. For example, by preloading the FSR by the initial force 540, the electrical response of the FSR may more accurately reflect the amount of force applied by a user against the touch input component. As a touch is made to the touch input component, the total amount of force at the FSR increases. The total amount of force comprises the amount of force associated with the touch and the amount of initial force associated with the preloading force.

It should be understood that force transducers have a characteristic that changes in relation to the amount of force upon the force transducer. The characteristic could be resistivity, such as that described in Figure 5a. Furthermore, while Figure 5a shows that resistance decreases as force is applied, an alternative embodiment of a force sensitive resister could have a resistance that increases as force is applied.

Figure 5b is a graph of a force sensitive characteristic of a force transducer in accordance with an embodiment in the disclosure. In Figure 5b, the characteristic increases in relation to the amount of force upon the force transducer. The force sensitivity may be represented by a curve, similar to Figure 5a, including a first area 510, second area 520, and third area 530 of the curve. The first area 510 may be associated with a break force 552, which is an amount of force that causes the force sensitive characteristic to increase to a threshold amount 562. In the second area 520 of the curve, the FSC may have a substantially linear portion of the curve, in which the force sensitive characteristic in this range is proportional to the amount of force in this range. For example, in a target range a change of force from a first force 552 to a second force 554 may be associated with a change in force sensitive characteristic from a first characteristic level 562 to a second characteristic level 564 in a nearly linear proportion. The third area 530 of the curve may represent a saturation range of the FSC.

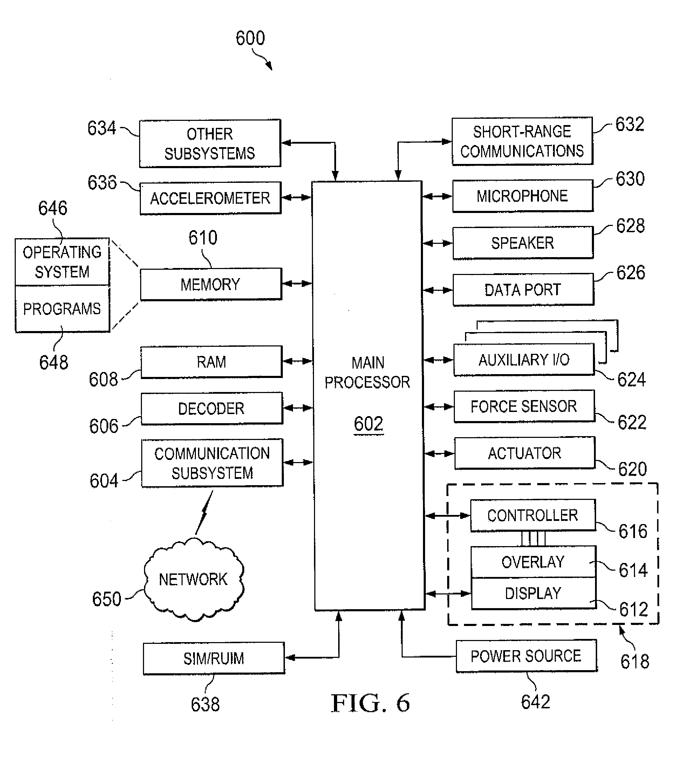

Figure 6 is a block diagram of an example electronic device in accordance with an embodiment in the disclosure. The portable electronic device 600 includes multiple components, such as a processor 602 that controls the overall operation of the portable electronic device 600. Communication functions, including data and voice communications, are performed through a communication subsystem 604. Data received by the portable electronic device 600 is decompressed and decrypted by a decoder 606. The communication subsystem 604 receives messages from and sends messages to a wireless network 650. The wireless network 650 may be any type of wireless network, including, but not limited to, data wireless networks, voice wireless networks, and networks that support both voice and data communications. A power source 642, such as one or more rechargeable batteries or a port to an external power supply, powers the portable electronic device 600.

The processor 602 interacts with other components, such as Random Access Memory (RAM) 608, memory 610, a display 612 with a touch sensitive overlay 614 operably coupled to an electronic controller 616 that together comprise a touch sensitive display 618. The touch sensitive display 618 may comprise part of a touch input component as described in this disclosure. The processor 602 may also interact with one or more actuators 620 (such as a piezo device as described in this disclosure), one or more force transducers 622 (such as a force sensitive resistor), an auxiliary input/output (I/O) subsystem 624, a data port 626, a speaker 628, a microphone 630, short-range communications 632, and other device subsystems 634.

User-interaction with a graphical user interface is performed through the touch input component. In one example, the processor 602 interacts with the touch-sensitive overlay 614 via the electronic controller 616. Information, such as text, characters, symbols, images, icons, and other items that may be displayed or rendered on a portable electronic device, is displayed on the touch-sensitive display 618 via the processor 602. The processor 602 may interact with an accelerometer 636 that may be utilized to detect direction of gravitational forces or gravity-induced reaction forces.

The touch-sensitive display 618 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 614. The overlay 614 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 618. The processor 602 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 618. For example, the x location component may be determined by a signal generated from one touch sensor, and the y location component may be determined by a signal generated from another touch sensor. A signal is provided to the controller 616 in response to detection of a touch. A touch may be detected from any suitable object, such as a finger, thumb, appendage, or other items, for example, a stylus, pen, or other pointer, depending on the nature of the touch-sensitive display 618. Multiple simultaneous touches may be detected.

To improve the accuracy of detecting a touch, the force transducer 622 and actuator 620 may be used. The force transducer 622 may have an electrical property that is detected by the processor 602 to determine the amount of force being applied to the touch input component. The force transducer 622 may be altered by pressing anywhere on the touch-sensitive display 618. Actuation of the actuator 620 may result in provision of tactile feedback. When force is applied, the touch-sensitive display 618 is depressible, pivotable, and/or movable. If the processor 602 detects a change in the force sensitive characteristic of the force transducer 622, wherein the change indicates that a touch is detected, the processor 602 may actuate the actuator 620 to provide a haptic vibration or other tactile feedback to the touch input component.

The portable electronic device 600 includes an operating system 646 and software programs or components 648 that are executed by the processor 602 and are typically stored in a persistent, updatable store such as the memory 610. Computer readable instructions stored in the memory may be executed by a processor to cause the portable electronic device to control aspects of the force transducer and actuator in accordance with this disclosure.

Additional applications or programs may be loaded onto the portable electronic device 600 through the wireless network 650, the auxiliary I/O subsystem 624, the data port 626, the short-range communications subsystem 632, or any other suitable subsystem 634. To identify a subscriber for network access, the portable electronic device 600 uses a Subscriber Identity Module or a Removable User Identity Module (SIM/RUIM) card 638 for communication with a network, such as the wireless network 650. Alternatively, user identification information may be programmed into memory 610.

A received signal such as a text message, an e-mail message, or web page download is processed by the communication subsystem 604 and input to the processor 602. The processor 602 processes the received signal for output to the display 612 and/or to the auxiliary I/O subsystem 624. A subscriber may generate data items, for example e-mail messages, which may be transmitted over the wireless network 650 through the communication subsystem 604. For voice communications, the overall operation of the portable electronic device 600 is similar. The speaker 628 outputs audible information converted from electrical signals, and the microphone 630 converts audible information into electrical signals for processing.

The present disclosure may be embodied in other specific forms without departing from its scope or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device, comprising:
a housing comprising at least a first portion and a second portion;
a base chassis attached to the first portion of the housing;
a touch input component moveable with respect to the base chassis;
a force transducer between the base chassis and the touch input component, wherein the force transducer has a characteristic that is variable relative to an amount of total force of the touch input component against the base chassis;
a spring coupled to the touch input component, wherein the spring exerts a preload force against the second portion of the housing, thereby causing the touch input component to be forced against the force transducer by a corresponding initial force; and
wherein the spring provides electrostatic grounding between the touch input component and the base chassis.

2. The electronic device of claim 1, wherein the force transducer is a force sensitive resistor (FSR) and the force sensitive characteristic is an electrical resistance characteristic.

3. The electronic device of claim 1, wherein the force transducer has a nonlinear response across various amounts of total force, and wherein the initial force caused by the spring is greater than a break force associated with the nonlinear response.

4. The electronic device of claim 1, wherein the force transducer has a nonlinear response across various amounts of total force, and wherein the initial force caused by the spring is associated with a beginning of a target range within the nonlinear response.

5. The electronic device of claim 1, wherein the touch input component comprises a support tray and a touch sensitive display.

6. The electronic device of claim 1, wherein said electrostatic grounding conducts electric charge between the touch input component and the base chassis.

7. The electronic device of claim 1, further comprising:
a communications subsystem for sending or receiving wireless communication signals.

8. A spring comprising:
a mounting portion configured to mount the spring to a first component;
a grounding portion comprising a conductive grounding arm that provides electrostatic grounding between the first component and a second component; and
a preload portion comprising at least one preload arm that provides a preload force in a direction opposite from the grounding portion.

9. The spring of claim 8, further comprising:
at least one side portion that aligns the spring with the first component.

10. The spring of claim 9, wherein said side portion comprises a side of said preload arm.

11. The spring of claim 8, wherein the preload portion comprises two preload arms positioned at opposite sides of the mounting portion.

12. The spring of claim 8, wherein the preload portion is coupled to the mounting portion by a bend.

13. The spring of claim 8, wherein the spring comprises an electrostatically conductive material fabricated as a single unit.

14. The spring of claim 8, wherein the mounting portion comprises a clip with a side portion that aligns the spring and the first component.

15. The spring of claim 8, wherein the mounting portion comprises a dimple for seating in a socket of the first component.

## Amended claims

### Amended claims in accordance with Rule 137(2) EPC.

**1.** A spring (150) comprising:
a mounting portion (152) configured to mount the spring to a first component;
a grounding portion (156) comprising a conductive grounding arm that provides electrostatic grounding between the first component and a second component; and
a preload portion (154) comprising at least one preload arm (154a, 154b) that provides a preload force in a direction opposite from the grounding portion.

**2.** The spring of claim 1, further comprising:
at least one side portion (340) that aligns the spring with the first component.

**3.** The spring of claim 2, wherein said side portion (340) comprises a side of said preload arm (154a, 154b).

**4.** The spring of claim 1, wherein the preload portion (154) comprises two preload arms (154a, 154b) positioned at opposite sides of the mounting portion (152).

**5.** The spring of claim 1, wherein the preload portion (154) is coupled to the mounting portion (152) by a bend (310).

**6.** The spring of claim 1, wherein the spring comprises an electrostatically conductive material fabricated as a single unit.

**7.** The spring of claim 1, wherein the mounting portion (152) comprises a clip with a side portion that aligns the spring and the first component.

**8.** The spring of claim 1, wherein the mounting portion (152) comprises a dimple (330) for seating in a socket of the first component.

**9.** The spring of claim 1, wherein the preload arm (154a, 154b) includes a stop arm (344) to prevent the preload arm from compressing beyond an allowable amount.

**10.** An electronic device, comprising:
a housing (120) comprising at least a first portion (124) and a second portion(126);
a base chassis (140) attached to the first portion (124) of the housing;
a touch input component (110) moveable with respect to the base chassis (140);
a force transducer (130) between the base chassis (140) and the touch input component (110), wherein the force transducer (130) has a characteristic that is variable relative to an amount of total force of the touch input component (110) against the base chassis (140);
a spring (150) as claimed in any preceding claim, the spring (150) being coupled to the touch input component (110), wherein the spring (150) exerts a preload force against the second portion (126) of the housing, thereby causing the touch input component (110) to be forced against the force transducer (130) by a corresponding initial force; and
wherein the spring (150) provides electrostatic grounding between the touch input component (110) and the base chassis (140).

**11.** The electronic device of claim 10, wherein the force transducer (130) is a force sensitive resistor (FSR) and the force sensitive characteristic is an electrical resistance characteristic.

**12.** The electronic device of claim 10, wherein the force transducer (130) has a nonlinear response across various amounts of total force, and wherein the initial force caused by the spring (150) is greater than a break force associated with the nonlinear response.

**13.** The electronic device of claim 10, wherein the force transducer (130) has a nonlinear response across various amounts of total force, and wherein the initial force caused by the spring (150) is associated with a beginning of a target range within the nonlinear response.

**14.** The electronic device of claim 10, wherein the touch input component (110) comprises a support tray (112) and a touch sensitive display (116).

**15.** The electronic device of claim 10, further comprising:
a communications subsystem for sending or receiving wireless communication signals.
